# EUROPÄISCHE PATENTSCHRIFT

(11) **EP 4 165 359 B1**
(45) Veröffentlichungstag und Bekanntmachung des Hinweises auf die Patenterteilung: **04.03.2026**
(21) Anmeldenummer: 21729248.1
(22) Anmeldetag: 21.05.2021
(51) Int. Cl.: F28D 20/00

(54) **WÄRMESPEICHERVORRICHTUNG ZUR SENSIBLEN WÄRMESPEICHERUNG IN SALZSCHMELZEN**
HEAT STORAGE FOR SENSIBLE STORAGE OF HEAT IN MOLTEN SALT
DISPOSITIF DU STOCKAGE DE CHALEUR AU SEL LIQUIDE

(30) Priorität: 15.06.2020 DE 102020115656
(43) Veröffentlichungstag der Anmeldung: 19.04.2023
(73) Patentinhaber: Deutsches Zentrum für Luft- und Raumfahrt e.V., 53227 Bonn (DE)
(72) Erfinder: BAUER, Thomas, 51147 Köln (DE); KLASING, Freerk, 51147 Köln (DE)
(74) Vertreter: dompatent
(86) Internationale Anmeldenummer: PCT/EP2021/063710
(87) Internationale Veröffentlichungsnummer: WO 2021/254728

(56) Entgegenhaltungen:
- DE-A1- 102010 047 545
- IT-A1- BS20 100 013
- US-A1- 2010 301 062
- US-A1- 2011 067 398
- US-A1- 2011 271 953

## Beschreibung

Die vorliegende Erfindung betrifft eine Wärmespeichervorrichtung zur sensiblen Wärmespeicherung in Salzschmelzen.

Zur Speicherung von Wärme in Wärmespeichern sind neben Latentwärmespeichern und thermochemischen Wärmespeichern Wärmespeicher bekannt, die eine sensible Wärmespeicherung vornehmen.

Wärmespeichervorrichtungen zur sensiblen Wärmespeicherung sind beispielsweise als sogenannte Flüssigsalzspeicher in solarthermischen Kraftwerken bekannt. Großmaßstäblich umgesetzt sind sogenannte Zweitanksysteme, bei denen in dem sogenannten Heißtank solarthermisch erhitztes, geschmolzenes Salz gespeichert wird und zur Entladung der Wärmeenergie durch einen Wärmetauscher in einen sogenannten Kalttank geleitet werden. Von diesem wird die kalte Salzschmelze durch die Wärmeübertrager oder Solarreceiver, wie beispielsweise Solarturmreceiver oder Parabolrinnenreceiver, zur Erhitzung geleitet und anschließend wieder in den Heißtank gespeichert. Dabei bleibt die Temperatur in den jeweiligen Tank konstant. Bei derartigen Systemen ist die maximale Temperatur der Salzschmelze auf ca. 560° C begrenzt, da andernfalls eine zu starke thermischen Zersetzung des Solarsalzes erfolgt. Solarsalz ist in der Literatur als Mischung mit 60 Gew% Natriumnitrat und 40Gew% Kaliumnitrat definiert. Bei der Zersetzung des Solarsalzes kommt es zu einer Reaktion in der flüssigen Phase und zu einer Abgabe von Gasen. Die wesentlichen Reaktionen bei der Zersetzung der Salzschmelze sind eine Nitrat-Nitrit-Umwandlung mit der Freisetzung von Sauerstoff und bei ansteigenden Temperaturen eine Nitrit-Oxid-Umwandlung mit der Freisetzung von Stickoxiden. Die Freisetzung von Sauerstoff ist tolerierbar. Die giftigen Stickoxide sind jedoch zu vermeiden, da diese nicht aus dem Speichersystem gelangen sollten, was jedoch nur mit großem Aufwand verwirklichbar ist.

Weiterhin kann die Zersetzung mit Stickoxiden zu einer Anreicherung von Oxidionen im Solarsalz führt. Durch die Oxidionen kann die Korrosionsrate von Behältermaterialien steigen. Insgesamt ist es daher erstrebenswert die Stickoxidreaktion so weit wie möglich zu unterdrücken.

Ein Zweitanksystem ist ferner mit einem relativ hohen konstruktiven Aufwand verbunden.

Neben den kommerziellen Zweitanksystemen sind auch sogenannte Eintanksysteme untersucht worden.

Grundsätzlich ist es wünschenswert, auch Wärme mit höheren Temperaturen zu speichern, da diese bei der Entladung effizienter genutzt werden kann. Daher sind erste Untersuchungen vorgenommen worden, die Temperatur der Salzschmelze auf über 560° C zu erhöhen.

Insgesamt ist der Partialdruck der jeweiligen Gasphase maßgeblich für die Zersetzung der Salzschmelze. Erste Ansätze sehen daher ein geschlossenes System vor, in dem sich ein im Wesentlichen konstanter Partialdruck der jeweiligen Gase einstellt, wodurch die weitere Zersetzung der Salzschmelze verlangsamt oder reduziert werden kann.

Problematisch ist bei derartigen geschlossenen Systemen insbesondere in Form von Zweitanksystemen, dass aufgrund der Temperaturänderung bei der Be- und Entladung eine Volumenänderung sowohl der Salzschmelze als auch der sich über der Salzschmelze in dem Tank befindlichen Gasatmosphäre entstehen kann. Das flüssige Salz hat eine Volumenzunahme bei der Erwärmung von 300° C auf 560° C von ca. 10 Vol%. Die Gasatmosphäre kann in diesem Temperaturbereich einer Volumenänderung von bis zu 50 % unterliegen.

Bei derartigen Wärmespeichertanks ist es darüber hinaus von Vorteil, wenn diese mit einem maximalen Überdruck von unter 0,5 bar betrieben werden, da in diesem Fall die Tanks nicht der Druckgeräterichtlinie unterliegen und geringe Wandstärken eingesetzt werden können, wodurch konstruktiver Aufwand und Kosten eingespart werden können.

Die zuvor beschriebenen technischen Beispiele sind allgemeines Knowhow der Anmelderin und geben nicht unbedingt einen konkreten Stand der Technik wieder. Die beschriebenen Systeme sind darüber hinaus nicht zwangsläufig vorveröffentlicht.

US 2011/271953 A1 offenbart eine Wärmespeichervorrichtung mit den Merkmalen des Oberbegriffs von Anspruch 1. Weitere Wärmespeichervorrichtungen sind aus IT BS20 100 013 A1, US 2010/301062 A1 und US 2011/067398 A1 bekannt.

Es ist die Aufgabe der vorliegenden Erfindung, eine Wärmespeichervorrichtung zur sensiblen Wärmespeicherung von Salzschmelzen zu schaffen, die von einfachem konstruktiven Aufbau ist und darüber hinaus eine Wärmespeicherung von Salzschmelzen von über 560° C ermöglicht.

Die erfindungsgemäße Wärmespeichervorrichtung ist definiert durch die Merkmale des Anspruchs 1.

Die erfindungsgemäße Wärmespeichervorrichtung zur sensiblen Wärmespeicherung in Salzschmelzen weist einen Wärmespeicherbehälter zur Aufnahme von Salzschmelze auf, wobei in dem Wärmespeicherbehälter eine Trennschicht angeordnet ist zur Trennung eines Kaltbereichs, in dem kalte Salzschmelze angeordnet ist, und einem Heißbereich, in dem heiße Salzschmelze angeordnet ist, wobei der Kaltbereich unterhalb des Heißbereichs angeordnet ist. Die Wärmespeichervorrichtung weist ferner eine Vorrichtung zur Be- und Entladung des Wärmebehälters auf, die mit dem Kaltbereich und dem Heißbereich verbunden ist, sowie eine Volumenausgleichvorrichtung zum Ausgleich einer temperaturbedingten Volumenänderung der Salzschmelze, wobei die Volumenausgleichvorrichtung mit dem Kaltbereich und/oder der Trennschicht zusammenwirkt. Über die Volumenausgleichvorrichtung kann in vorteilhafter Weise die temperaturbedingte Volumenänderung der Salzschmelze, die beim Be- und Entladen der Wärmespeichervorrichtung entsteht, ausgeglichen werden. Insbesondere kann durch die Volumenausgleichvorrichtung erreicht werden, dass die Wärmespeicherbehälter im oberen Bereich, und somit im Heißbereich, vollständig oder nahezu vollständig gefüllt ist. Beim Be- und Entladen des Wärmespeicherbehälters bleiben stets der Kaltbereich, die Trennschicht und der Heißbereich oder zumindest ein Teil der Trennschicht und der Heißbereich bestehen, wobei sich die Trennschicht verschiebt, sodass das jeweils von dem Heiß- und Kaltbereich eingenommene Volumen geändert wird. Da stets ein Heißbereich, in dem heiße Salzschmelze angeordnet ist, auch im entladenen Zustand des Wärmespeicherbehälters, vorhanden ist, kann auch oberhalb des Heißbereichs eine in dem Wärmespeicherbehälter erlaubt werden. Da die Gasatmosphäre stets zwischen den oberen Wandungen des Wärmespeicherbehälters und dem Heißbereich angeordnet ist und somit eine konstante Temperatur aufweist, kommt es beim Be- und Entladen des Wärmespeicherbehälters zu keiner Volumenänderung der Gasatmosphäre. Somit ist auch davon auszugehen, dass ein konstanter Partialdruck der Gasphase vorliegt, sodass eine Stabilität der heißen Salzschmelze gegeben ist.

Die erfindungsgemäße Wärmespeichervorrichtung ist jedoch besonders vorteilhaft betreibbar, wenn durch die Volumenausgleichvorrichtung sichergestellt ist, dass sich oberhalb des Heißbereiches keine oder nur eine sehr kleine Gasatmosphäre ausbildet.

Die Vorrichtung zu Be- und Entladung des Wärmespeicherbehälters kann eine Beladepumpe, eine sogenannte Kaltpumpe, aufweisen, die im entladenen Zustand der Wärmespeichervorrichtung mit dem Kaltbereich verbunden ist und eine Entladepumpe, eine sogenannte Heißpumpe, die mit dem Heißbereich verbunden ist. Bei der Beladung wird über die Kaltpumpe kalte Salzschmelze aus dem Kaltbereich herausgepumpt und beispielsweise Solarreceivern eines solarthermischen Kraftwerks zugeführt. Nach der Erwärmung in den Solarreceivern wird die nun heiße Salzschmelze in den Heißbereich eingeleitet. Bei der Entladung der Wärmespeichervorrichtung wird über die Heißpumpe heiße Salzschmelze aus dem Heißbereich ausgepumpt und einem Wärmetauscher zugeführt. Die mittels des Wärmetauschers abgekühlte Salzschmelze wird anschließend dem Kaltbereich zugeführt. Durch die entsprechende Volumenänderungen des Heiß- und Kaltbereichs bewegt sich die Trennschicht entsprechend auf und ab.

Die Trennschicht kann beispielsweise eine natürliche Trennschicht sein, d.h. dass sie aus Salzschmelze besteht, wobei in diesem Fall eine natürliche Temperaturschichtverteilung in dem Wärmespeicherbehälter vorliegt. Die Trennschicht kann auch beispielsweise als eine schwimmende Einbaueinrichtung, beispielsweise eine Trennplatte aufweisen, wodurch die thermische Isolierung des Kaltbereichs und des Heißbereichs in vorteilhafter Weise erreicht werden kann. Es kann auch vorgesehen sein, dass im Salzvolumen ein Füllermaterial wie beispielsweise ein Schüttgut, das üblicherweise kostengünstiger ist als das Flüssigsalz, eingebracht ist. Die Füllermaterial verringert die Wärmeleitung und freie Konvektion und es kann sich ebenfalls eine stabile Trennschicht ausbilden. Das Füllermaterial kann beispielsweise Quarzit-Sand, Silica- Sand, Takonit, Basalt, gebrannter Rotschlamm, Schlacken o. ä. sein. Derartiges Füllermaterial hat sich als besonders vorteilhaft herausgestellt, da dieses von der Salzschmelze durchströmt werden und die Kosten des Inventars senken kann. Der Wärmespeicherbehälter kann ein sogenannter Thermocline-Tank sein.

Insbesondere kann vorgesehen sein, dass die Salzschmelze in dem Wärmespeicherbehälter drucklos, d.h. mit Atmosphärendruck gespeichert wird oder allenfalls mit einem geringen Unter- oder Überdruck von unter +/-0,5 bar. Die Volumenausgleichvorrichtung wirkt insbesondere direkt mit dem Kaltbereich zusammen. Insbesondere kann vorgesehen sein, dass die Volumenausgleichvorrichtung auf die in dem Kaltbereich oder in der Trennschicht angeordnete Salzschmelze einwirkt.

Erfindungsgemäß erfolgt der Volumenausgleich über ein Ausgleichsfluid, indem das Ausgleichsfluid in den Wärmespeicherbehälter eingeleitet wird. Dabei ist das Ausgleichsfluid zum Volumenausgleich in den Kaltbereich oder die Trennschicht einleitbar. Mit anderen Worten: Das Ausgleichsfluid wird direkt in die kalte Salzschmelze oder die Salzschmelze in der Trennschicht eingeleitet.

Erfindungsgemäß ist vorgesehen, dass die Volumenausgleichvorrichtung einen Ausgleichsbehälter aufweist, wobei der Ausgleichsbehälter mit dem Kaltbereich und/oder der Trennschicht verbunden ist, wobei das Ausgleichsfluid in dem Ausgleichsbehälter angeordnet ist.

Es kann vorgesehen sein, dass der Kaltbereich und die Trennschicht oder die Trennschicht beispielsweise stets mindestens 5 % des Gesamtvolumens des Wärmespeicherbehälters einnimmt.

Der Ausgleichsbehälter kann beispielsweise mit einer Fluidleitung mit dem Wärmespeicherbehälter verbunden sein, wobei die Fluidleitung an einen Bodenbereich, beispielsweise einer Bodenplatte mit dem Wärmespeicherbehälter angeschlossen ist oder an einem unteren seitlichen Wandbereich des Wärmespeicherbehälters, wobei der untere seitliche Wandbereich des Wärmespeicherbehälters sich über

maximal 5 %der Höhe des Wärmespeicherbehälters ausgehend von dem Bodenbereich erstreckt.

Erfindungsgemäß ist vorgesehen, dass das Ausgleichsfluid ein Gas ist. Da die verwendete Salzschmelze in Systemen mit Wärmespeichervorrichtungen ein großer Kostenfaktor ist und bei der zuvor beschriebenen Wärmespeichervorrichtung, bei der das Ausgleichsfluid kalte Salzschmelze ist, somit stets ein gewisser Anteil von Salzschmelze ungenutzt ist, hat die Verwendung eines Gases als Ausgleichsfluid Kostenvorteile.

Dabei ist vorzugsweise vorgesehen, dass in dem Wärmespeicherbehälter eine Gasrückhaltevorrichtung angeordnet ist, die das Gas nach Einleitung in den Kaltbereich oder in die Trennschicht in einem vorgegebenen Abschnitt in dem Wärmespeicherbehälter hält. Die Gasrückhaltevorrichtung kann beispielsweise als eine beispielsweise gewölbte Platte oder eine Platte mit einem vorstehenden Seitenrand, der nach unten von der Platte absteht, ausgebildet sein. Beim Einleiten des Ausgleichsfluids in Form von Gas in den Kaltbereich fängt sich dieses unterhalb der Gasrückhaltevorrichtung, sodass es an dieser Stelle verbleibt. Beim Einleiten drückt das Gas die kalte Salzschmelze unter der Gasrückhaltevorrichtung heraus. Beim Beladen der erfindungsgemäßen Wärmespeichervorrichtung wird das Gas von der kalten Salzschmelze in den Ausgleichsbehälter zurückgedrückt. Dabei ist es von Vorteil, wenn der Ausgleichsbehälter mit einer Fluidleitung mit dem Kaltbereich verbunden ist, wobei die Fluidleitung unmittelbar unterhalb der Gasrückhaltevorrichtung in den Wärmespeicherbehälter mündet. Auf diese Weise kann das Ausgleichsfluid in Form von Gas in vorteilhafter Weise in den Kaltbereich eingeleitet und aus diesem entnommen werden. Die Gasrückhaltevorrichtung kann sich vom unteren seitliche Wandbereich aus in Richtung des Inneren des Wärmespeicherbehälters erstrecken.

Die Gasrückhaltevorrichtung in Form einer Platte kann die Temperaturschichtung in dem Wärmespeicherbehälter stören. Daher können zusätzliche Vorrichtungen vorgesehen sein, um die Schichtung zu stabilisieren. Beispielsweise kann ein zusätzlicher Diffusor am Randbereich der Gasrückhaltevorrichtung vorgesehen sein, durch den die Schichtung erhalten bleibt. Die Gasrückhaltevorrichtung kann beispielsweise umlaufend an der Wandung Wärmespeicherbehälters anliegen und nur in einem oder mehreren Abschnitten mit Abstand mit zu der Wandung verlaufen, um einen oder mehrere Durchlässe zu bilden. An dem Durchlass oder den Durchlässen kann die Gasrückhaltevorrichtung jeweils den vorstehenden Seitenrand aufweisen. Auch kann an den die Gasrückhaltevorrichtung an Durchlass oder den Durchlässen jeweils den Diffusor aufweisen.

Es kann vorgesehen sein, dass der Ausgleichsbehälter eine Verbindung zur Atmosphäre aufweist, wobei bei temperaturbedingter Ausdehnung der Salzschmelze das Gas, das aus dem Wärmespeicherbehälter gedrückt wird, in die Atmosphäre leitbar ist. Das den Ausgleichsbehälter umfassende Ausgleichsystem ist somit als halboffenes System ausgebildet. Bei dem Entladevorgang kann das Gas beispielsweise über eine entsprechende Gasversorgung dem Ausgleichsbehälter zur Verfügung gestellt werden. Anders als die Gasphase im Heißbereich des Speichers kann die Gasphase im Kaltbereich bzw. in der Trennschicht des Speichers im Wesentlichen frei von Stickoxiden sein, so dass ein direkter Austausch mit der Umgebung möglich ist. Aufgrund der relativ geringen Temperatur des Gases sind die beim Ableiten in die Atmosphäre auftretenden thermischen Verluste überschaubar. Weiterhin sind konstruktiven Anforderungen an den Ausgleichsbehälter und die daran angeschlossenen Gasleitungen relativ gering, da diese relativ geringen Temperaturen und relativ kleinen Stickoxidbelastung ausgesetzt sind.

Beispielsweise kann vorgesehen sein, dass der Ausgleichsbehälter über ein Überdruckventil mit der Atmosphäre verbunden ist und über ein Unterdruckventil mit der Gasversorgung, sodass bei der Beladung des Systems, wobei Gas in den Ausgleichsbehälter gedrückt wird, dieses ggf. über das Überdruckventil an die Atmosphäre geleitet werden kann. Bei der Entladung des Wärmespeicherbehälters entsteht ein Unterdruck, sodass das Unterdruckventil geöffnet wird, wodurch das notwendige Gas in den Ausgleichsbehälter strömen kann.

Anstelle von Überdruckventil und Unterdruckventil ist es auch möglich, Regelventile vorzusehen, sodass ein Regler das Ausleiten des Gases in die Atmosphäre und das Einleiten des Gases aus der Gasversorgung in den Ausgleichsbehälter regelt.

Die halboffenen Systeme haben den Vorteil, dass der Ausgleichbehälter relativ klein ausgebildet sein kann, da er nicht das gesamte Gasvolumen, das für den Volumenausgleich notwendig ist, aufnehmen muss.

Es kann auch vorgesehen sein, dass an dem Ausgleichsbehälter eine Volumenänderungsvorrichtung zur Volumenänderung des Gases angeordnet ist. Mit anderen Worten: Wenn es notwendig ist, dass die Volumenausgleichvorrichtung Gas in den Wärmespeicherbehälter einleitet, wird über die Volumenänderungsvorrichtung das Volumen des Gases vergrößert und somit die Dichte des Gases verringert. Wenn während des Beladevorgangs das Gas aus dem Wärmespeicherbehälter in den Ausgleichsbehälter zurückgeführt wird, erfolgt über die Volumenänderungsvorrichtung eine Verringerung des Gasvolumens und somit eine Dichtevergrößerung. Dies kann beispielsweise erfolgen, indem die Volumenänderungsvorrichtung ein Heizelement und/oder eine Kühlvorrichtung aufweist, wobei über das Heizelement und/oder die Kühlvorrichtung zur Volumenänderung die Temperatur des Gases veränderbar ist. Mit anderen Worten: Die Volumenänderungsvorrichtung nimmt die notwendige Dichteänderung des Gases thermisch vor.

Für eine thermische Dichte- und somit Volumenveränderung des Gases kann auch vorgesehen sein, dass der Ausgleichsbehälter mit einem thermischen Energiespeicher, beispielsweise einem Regeneratorspeicher, verbunden ist, der dem Gas Wärme zuführt oder entzieht wodurch das Volumen über die Temperatur das Gases veränderbar ist. Das Gas ist somit über den thermischen Energiespeicher erwärmbar oder abkühlbar.

Neben einer thermischen Volumenänderung des Gases ist auch eine mechanischen Volumenänderung des Gases möglich, indem die Volumenänderungsvorrichtung eine Vorrichtung zur mechanischen Volumenänderung des Gases aufweist. Diese kann beispielsweise ein Gebläse, Kompressor, eine Turbine, ein Verdichter o. ä. umfassen.

Es besteht auch die Möglichkeit, dass der Ausgleichsbehälter ein veränderbares Volumen aufweist. Dabei kann beispielsweise vorgesehen sein, dass der Ausgleichsbehälter eine elastische, bewegbare oder flexible Wand oder einen elastischen, bewegbaren oder flexiblen Wandabschnitt aufweist. Bei einem Beladevorgang des Wärmespeicherbehälters wird das Gas in den Ausgleichsbehälter gedrückt und beispielsweise wird eine bewegbare Wand oder eine flexible Wand nach außen gedrückt oder eine elastische Wand nach außen gedrückt und entsprechend gedehnt. Beim Entladevorgang des Wärmespeicherbehälters wird das Gas dem Ausgleichsbehälter entnommen und die elastische, bewegbare oder flexible Wand wird wieder in die vorherige Position zurückbewegt. Bei dem Ausführungsbeispiel einer bewegbaren Wand oder eines bewegbaren Wandabschnitts ist es insbesondere möglich, dass die Wand oder der Wandabschnitt verschiebbar ist. Grundsätzlich besteht die Möglichkeit, dass die flexible oder bewegbare Wand oder der flexible oder bewegbare Wandabschnitt antreibbar ist, beispielsweise mittels eines aktiven Antriebs oder eines passiven Antriebs, wie beispielsweise einem elastischen Element wie einer Feder o. ä. Der aktive Antrieb kann beispielsweise die bewegbare oder flexible Wand derart drücken, dass das Volumen in dem Ausgleichsbehälter verringert wird, sodass das Gas bei dem Entladevorgang des Wärmespeicherbehälters in den Kaltbereich des Wärmespeicherbehälters gedrückt wird. Bei dem Vorsehen eines elastischen Elements an der flexiblen oder bewegbaren Wand kann beispielsweise das elastische Element zusammengedrückt werden, wenn das Gas beim Beladevorgang des Wärmespeicherbehälters in den Ausgleichsbehälter gedrückt wird und beim Entladevorgang des Wärmespeicherbehälters kann sich das elastische Element rückformen und somit die flexible oder bewegbare Wand zurückdrücken, sodass das Gas aus dem Ausgleichsbehälter herausgedrückt wird.

Bei der erfindungsgemäßen Wärmespeichervorrichtung kann auch vorgesehen sein, dass die Volumenausgleichvorrichtung in dem Kaltbereich bzw. der Trennschicht einen Ausgleichsraum aufweist, der ein veränderbares Volumen aufweist, wobei das Ausgleichsfluid in den Ausgleichsraum einleitbar ist. Der Ausgleichsraum mit dem veränderbaren Volumen kann beispielsweise eine elastische, bewegbare oder flexible Wand oder einen elastischen, bewegbaren oder flexiblen Wandabschnitt aufweisen. Beim Entladen des Wärmespeicherbehälters dehnt sich der Ausgleichsraum beim Einleiten des Ausgleichsfluids zum Volumenausgleich in dem Wärmespeicherbehälter aus. Beim Beladen des Wärmespeicherbehälters wird der Ausgleichsraum beispielsweise zusammengedrückt, sodass das Ausgleichsfluid aus dem Ausgleichsraum heraustritt. Die bewegbare Wand bzw. der bewegbare Wandabschnitt des Ausgleichsraums kann insbesondere verschiebbar sein.

Bei der erfindungsgemäßen Wärmespeichervorrichtung kann auch vorgesehen sein, dass der Wärmespeicherbehälter eine bewegbare Wand oder einen bewegbaren Wandabschnitt aufweist. Beispielsweise kann der Boden des Wärmespeicherbehälters bewegbar sein und beispielsweise über eine Antriebsvorrichtung bewegbar, insbesondere verschiebbar sein. Die Volumenausgleichvorrichtung nimmt somit eine Volumenänderung des Wärmespeicherbehälters vor, in dem die bewegbare Wand oder der bewegbare Wandabschnitt zur Volumenänderung bewegt wird.

Im Folgenden wird unter Bezugnahme auf die nachfolgenden Figuren die Erfindung näher erläutert. Es zeigen:
- Figur 1: eine schematische Schnittdarstellung einer Wärmespeichervorrichtung,
- Figuren 2a und 2b: die Wärmespeichervorrichtung der Figur 1 im Be- und im Entladezustand,
- Figur 3: eine schematische Darstellung einer z weiteren Wärmespeichervorrichtung,
- Figuren 4a und 4b: eine schematische Darstellung einer erfindungsgemäßen Wärmespeichervorrichtung im be- und entladenen Zustand und die
- Figuren 5a bis 6b: schematische Darstellungen der Volumenausgleichvorrichtung des Ausführungsbeispiels der Figuren 4a und 4b.

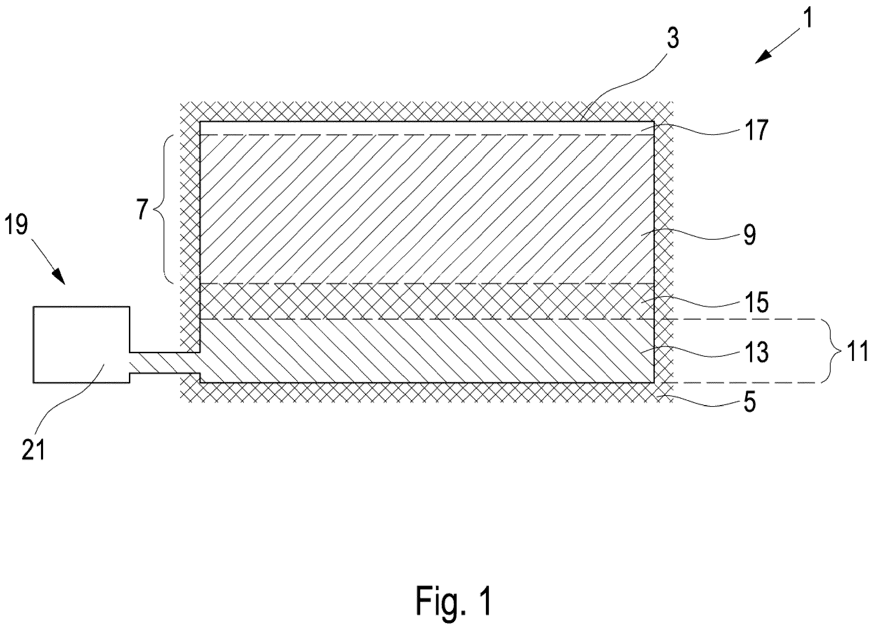

In Figur 1 ist eine Wärmespeichervorrichtung 1 schematisch in einer Schnittdarstellung gezeigt. Da anhand der Figur 1 zunächst nur das Prinzip der Wärmespeichervorrichtung 1 dargestellt werden soll, wurde auf die Darstellung einiger Teilbereiche der Wärmespeichervorrichtung 1 verzichtet.

Die Wärmespeichervorrichtung 1 weist einen Wärmespeicherbehälter 3 auf, der beispielsweise als Tank ausgebildet sein kann. Die Wärmespeichervorrichtung 1 dient zur Wärmespeicherung von sensibler Wärme in Salzschmelzen und ist beispielsweise zur Wärmespeicherung von Wärmeenergie eines Solarkraftwerks einsetzbar.

Der Wärmespeicherbehälter 3 der Wärmespeichervorrichtung 1 ist als sogenanntes Eintanksystem ausgebildet, bei dem in dem Wärmespeicherbehälter 3 drei unterschiedliche Temperaturschichten der in dem Behälter befindlichen Salzschmelze vorhanden sind. Es handelt sich dabei um einen Tank nach dem sogenannten Thermocline-Prinzip.

Der Wärmespeicherbehälter 3 ist beispielsweise als Flachbodentank und von einer Isolierschicht 5 umgeben.

In dem Wärmespeicherbehälter 3 ist durch die Salzschmelze ein sogenannter Heißbereich 7 gebildet, in dem heiße Salzschmelze 9 angeordnet ist, und ein Kaltbereich 11, in dem kalte Salzschmelze 13 angeordnet ist. Unter heißer Salzschmelze wird Salzschmelze bis etwa 620° C verstanden. Kalte Salzschmelze ist im Bereich von 300° C. Sowohl die heiße als auch die kalte Salzschmelze sind stehts flüssig. Der Kaltbereich 11 ist unterhalb des Heißbereichs 7 angeordnet. Der Heißbereich 7 wird von dem Kaltbereich 11 durch eine Trennschicht 15 getrennt, wobei die Trennschicht 15 als natürliche Trennschicht ausgebildet sein kann, d.h. ebenfalls aus Salzschmelze. Auch kann die Trennschicht 15 entsprechende Einbauten aufweisen, wie beispielsweise eine schwimmende Trennplatte.

Bei dem in Figur 1 dargestellten Ausführungsbeispiel ist oberhalb des Heißbereichs 7 eine dünne Gasschicht 17 gebildet. Grundsätzlich ist es jedoch Ziel, die erfindungsgemäße Wärmespeichervorrichtung 1 derart zu betreiben, dass der Wärmespeicherbehälter 3 vollständig oder nahezu vollständig mit Salzschmelze gefüllt ist.

Eine nicht dargestellte Vorrichtung zur Be- und Entladung des Wärmespeicherbehälters 3 entnimmt zum Entladen heiße Salzschmelze 9 aus dem Heißbereich 7, wobei abgekühlte kalte Salzschmelze 13 in den Kaltbereich 11 eingeleitet wird. Beim Beladen der Wärmespeichervorrichtung 1 wird kalte Salzschmelze 13 aus dem Kaltbereich 11 entnommen und nach dem Erhitzen in den Heißbereich 7 eingeleitet. Die Trennschicht 15 wandert somit beim Be- und Entladen entsprechend in dem Wärmespeicherbehälter 3 auf und ab.

Da die heiße Salzschmelze 9 eine geringe Dichte und somit ein größeres Volumen aufweist als die kalte Salzschmelze 13, ist es notwendig, einen Volumenausgleich in dem Wärmespeicherbehälter 3 vorzunehmen, um die dünne Gasschicht 17 weitestgehend konstant oder den Wärmespeicherbehälter 3 vollständig gefüllt mit Salzschmelze zu halten.

Daher weist die erfindungsgemäße Wärmespeichervorrichtung 1 eine Volumenausgleichvorrichtung 19 auf. Die Volumenausgleichvorrichtung 19 weist eine Ausgleichsbehälter 21 auf, der in dem dargestellten Zustand mit dem Kaltbereich 11 verbunden ist. In dem Ausgleichsbehälter 21 ist ein Ausgleichsfluid angeordnet, dass zum Volumenausgleich mit der kalten Salzschmelze 13 in dem Kaltbereich 11 zusammenwirkt. In den in Figuren 1-3 dargestellten Ausführungsbeispielen ist das Ausgleichsfluid kalte Salzschmelze, was nicht Teil der Ansprüche ist.

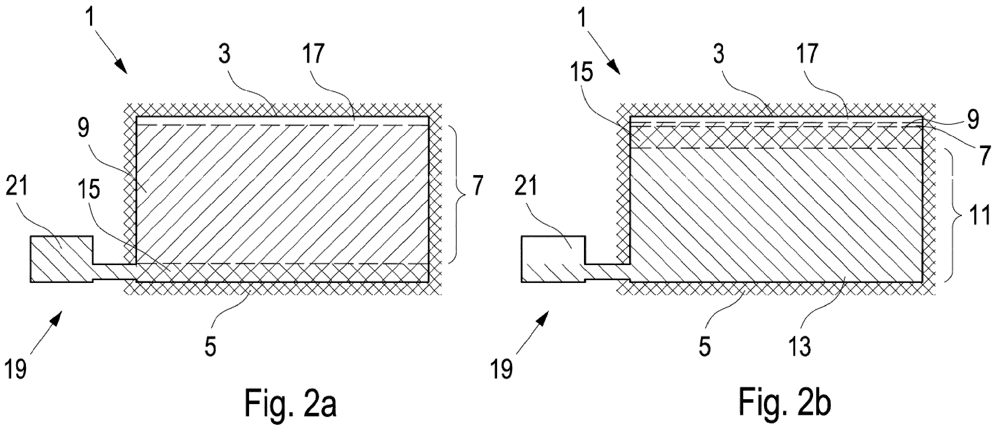

In Figuren 2a und 2b kann die Funktion der Wärmespeichervorrichtung 1 gemäß Figur 1 anhand des beladenen Zustands (Figur 2a) und des entladenen Zustands (Figur 2b) näher erläutert werden.

In Figur 2a ist der Wärmespeicherbehälter 3 im beladenen Zustand gezeigt, sodass der Wärmespeicherbehälter 3 nahezu vollständig mit heißer Salzschmelze 9 gefüllt ist. Somit nimmt der Heißbereich 7 den größten Teil des Wärmespeicherbehälters 3 ein. Der Kaltbereich 11 ist lediglich als dünne untere Schicht vorhanden oder vollständig aus der Wärmespeicherbehälters 3 entnommen worden. Da die heiße Salzschmelze 9 in der Wärmespeichervorrichtung 1 eine verglichen mit der kalten Salzschmelze 13 geringe Dichte aufweist, wird ein größeres Volumen für die heiße Salzschmelze 9 benötigt. Somit ist das Ausgleichsfluid in Form von kalter Salzschmelze in dem Ausgleichsbehälter 21 der Volumenausgleichvorrichtung 19 gedrückt. Nach dem Entladen der Wärmespeichervorrichtung 1 (Figur 2b) ist ein Großteil des Wärmespeicherbehälters 3 mit kalter Salzschmelze 13 gefüllt, sodass entsprechend der Kaltbereich 11 einen großen Anteil in dem Wärmespeicherbehälter 3 einnimmt. Oberhalb des Kaltbereichs 11 ist lediglich eine dünne Schicht von heißer Salzschmelze 9 angeordnet, sodass ein entsprechend dünner Abschnitt den Heißbereich 7 bildet.

Da die kalte Salzschmelze 13 eine größere Dichte aufweist als die heiße Salzschmelze 9, nimmt die kalte Salzschmelze 13 ein geringere Volumen in dem Wärmespeicherbehälter 3 ein, so dass der Wärmespeicherbehälter 3 nicht vollständig gefüllt wäre, wobei durch das Zuführen von kalter Salzschmelze durch die Volumenausgleichvorrichtung das fehlende Volumen ausgeglichen wird. Entsprechend ist der Ausgleichsbehälter weitestgehend entleert.

Wie aus den Figuren 2a und 2b erkennbar ist, ist eine eventuell vorhandene dünne Gasschicht 17 in dem Wärmespeicherbehälter 3 stets in Kontakt mit dem Heißbereich 7, sodass die Gasschicht 17 eine konstante Temperatur aufweist, die im Wesentlichen der Temperatur der heißen Salzschmelze 9 entspricht. Dadurch erfolgt weder beim Be- noch beim Entladen der Wärmespeichervorrichtung 1 eine temperaturbedingte Volumenänderung der Gasschicht 17. Die Wärmespeichervorrichtung 1 ist darüber hinaus als im Wesentlichen geschlossenes System ausgebildet, sodass zumindest der Bereich, in dem die heißte Salzschmelze 9 angeordnet ist, gegenüber der Atmosphäre verschlossen ist, um ein Zersetzung und Ausgasen der heißen Salzschmelze 9 zu reduzieren oder zu verhindern.

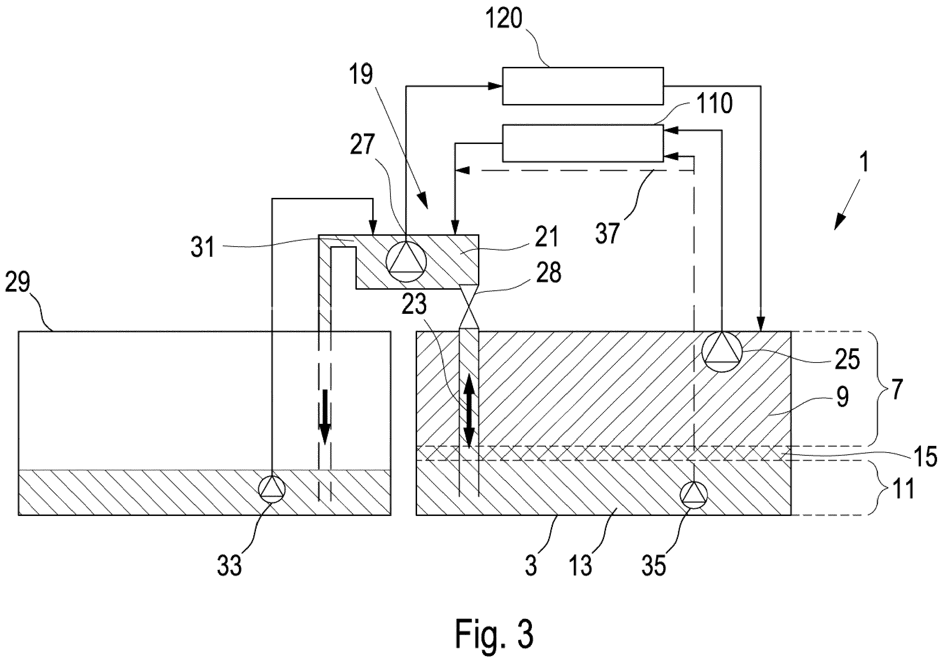

In Figur 3 ist eine Wärmespeichervorrichtung 1 in einer nicht beanspruchten zweiten Ausführungsform schematisch dargestellt. Die Wärmespeichervorrichtung 1 ist ähnlich wie die in Figur 1 dargestellte Wärmespeichervorrichtung 1 aufgebaut. Der wesentliche Unterschied zu der in Figur 1 dargestellten Wärmespeichervorrichtung 1 ist, dass der Ausgleichsbehälter 21 der Volumenausgleichvorrichtung 19 oberhalb des Wärmespeicherbehälters 3 angeordnet ist. Der Ausgleichsbehälter 21 ist in diesem Fall als Becken ausgebildet, sodass eine Verbindung zu der Atmosphäre besteht. Der Ausgleichsbehälter 21 ist über eine Steigleitung 23 mit dem Kaltbereich 11 verbunden. In der Figur 3 ist auch die Vorrichtung zu Be- und Entladung des Wärmespeicherbehälters 3 dargestellt. Die Vorrichtung zur Be- und Entladung des Wärmespeicherbehälters 3 weist eine Entladepumpe 25 auf, die in dem Heißbereich 7 angeordnet ist. Ferner weist die Vorrichtung zur Be- und Entladung des Wärmespeicherbehälter 3 eine Beladepumpe 27 auf, die in dem Ausgleichsbehälter 21 angeordnet ist. Der Ausgleichsbehälter 21 ist somit in dem Kreislauf zur Beladung der Wärmespeichervorrichtung 1 angeordnet. Bei vollständiger Beladung kann auch der Kaltbereich 11 vollständig den Ausgleichsbehälter 21 gedrückt werden, so dass dann im beladenen Zustand Steigleitung 23 mit der Trennschicht 15 verbunden ist.

Die Steigleitung 23 ist über ein Ventil 28 mit dem Ausgleichsbehälter 21 verbunden. Bei dem Entladevorgang wird mittels der Entladepumpe 25 heiße Salzschmelze 9 einem Entladeprozess 110 zugeführt. Die durch den Entladeprozess abgekühlte kalte Salzschmelze wird dem Ausgleichsbehälter 21 zugeführt und gelangt bei geöffnetem Ventil 28 aufgrund des auf die kalte Salzschmelze in dem Ausgleichsbehälter 21 wirkenden atmosphärischen Drucks durch die Steigleitung 23 in den Kaltbereich 11.

Bei dem Beladen der Wärmespeichervorrichtung 1 wird die kalte Salzschmelze aus dem Ausgleichsbehälter 21 mittels der Beladepumpe 27 einem Beladeprozess 120 zugeführt, der beispielsweise durch ein solarthermisches Kraftwerk vorgenommen werden kann. Die erhitzte Salzschmelze wird dem Heißbereich 7 zugeführt. Die heiße Salzschmelze 9 in dem Heißbereich 7 drückt die Trennschicht 15 nach unten, sodass kalte Salzschmelze 13 aus dem Kaltbereich 11 durch die Steigleitung 23 bei geöffnetem Ventil 28 in den Ausgleichsbehälter 21 gedrückt wird.

Die in Figur 3 dargestellte Ausführungsform hat den besonderen Vorteil, dass die Entladepumpe 25 und die Beladepumpe 27 kostengünstig ausgeführt werden können, da diese nur einen sehr kurzen Pumpenstutzen benötigen.

Wie in Figur 3 dargestellt ist, kann neben dem Wärmespeicherbehälter 3 ein weitere Behälter 29 angeordnet sein. Dieser kann mit einem Überlauf 31 des Ausgleichsbehälters 21 verbunden sein, sodass überschüssige kalte Salzschmelze durch den Überlauf 31 in den weiteren Behälter 29 gelangen kann. Dadurch kann der Ausgleichsbehälter 21 mit relativ kleinem Volumen ausgebildet sein. Beim Entladeprozess kann mittels einer Zusatzpumpe 33 kalte Salzschmelze in den Ausgleichsbehälter 21 gepumpt werden.

Der weitere Behälter 29 kann eine an den Wärmespeicherbehälter 3 angepasste Größe aufweisen, sodass der weitere Behälter 29 auch für eine Entleerung des Wärmespeicherbehälters 3 zu Revisions- oder Reparaturzwecken genutzt werden kann. Hierfür ist in dem Wärmespeicherbehälter 3 eine Entleerungspumpe 35 vorgesehen, die über eine Rücklaufleitung mit dem Ausgleichsbehälter 21 verbunden ist.

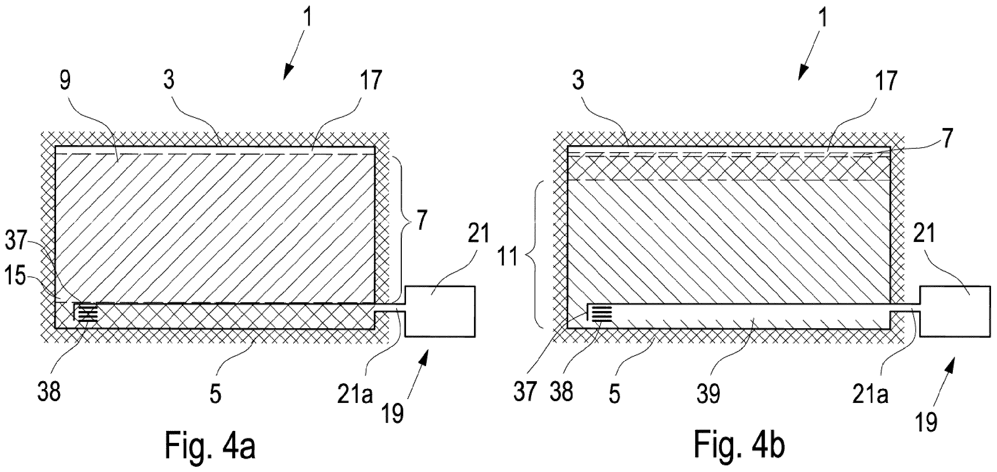

In den Figuren 4a und 4b ist ein die erfindungsgemäßen Wärmespeichervorrichtung 1 schematisch in einer Schnittdarstellung gezeigt, wobei Figur 4a einen beladenen Zustand und Figur 4b einen entladenen Zustand darstellt. Die Figuren 4a und 4b sind mit den Figuren 2a und 2b vergleichbar.

Der wesentliche Unterschied zwischen dem in Figuren 4a und 4b dargestellten dritten Ausführungsbeispiel von dem in Figuren 2a und 2b dargestellten ersten Ausführungsbeispiel der erfindungsgemäßen Wärmespeichervorrichtung 1 ist die Art des Ausgleichsfluids. Während in Figuren 2a und 2b kalte Salzschmelze als Ausgleichsfluid verwendet wird, wird bei der in Figuren 4a und 4b dargestellten erfindungsgemäßen Wärmespeichervorrichtung 1 ein Gas als Ausgleichsfluid verwendet. In dem Ausgleichsbehälter 21 ist somit ein Gas
angeordnet, das die Volumenausgleichvorrichtung 19 zum Volumenausgleich in den Wärmespeicherbehälter 3 einleiten kann. Im Wärmespeicherbehälter 3 ist ferner eine Gasrückhaltevorrichtung 37 angeordnet, die als Platte mit abgekantetem Rand ausgeführt sein kann. Wie aus Figur 4b ersichtlich ist, wird das zum Volumenausgleich in den Wärmespeicherbehälter 3
eingeleitete Gas 39 durch die Gasrückhaltevorrichtung 37 in einem vorgegebenen Abschnitt in der Trennschicht 15 gehalten. Die Verwendung von Gas als Ausgleichfluid hat den Vorteil, dass das Gas deutlich günstiger als das für die Salzschmelze verwendete Solarsalz ist. Da das Ausgleichfluid in Form von Salzschmelze nicht für die Wärmespeicherung verwendet werden kann, hat die Verwendung von Salzschmelze als Ausgleichfluid einen Kostennachteil.

Wie aus den Figuren 4a und 4b hervorgeht, kann die kalte Salzschmelze 13 im beladenen Zustand auch in den Abschnitt, in dem im entladenen Zustand das Gas 39 angeordnet ist, gelangen, indem die kalte Salzschmelze 13 unter die Gasrückhaltevorrichtung 37 gedrückt wird. Um ein Einleiten und Ausleiten des Gases 39 in den Wärmespeicherbehälter 3 zuverlässiger Weise zu gewährleisten, ist eine Zuführungsleitung 21a, die den Ausgleichsbehälter 21 mit dem Kaltbereich 11 bzw. der Trennschicht 15 verbindet, unmittelbar unterhalb der Gasrückhaltevorrichtung 37 angeordnet.

Wie aus Figur 4a ersichtlich ist, wird die Trennschicht 15, die bei dem in Figur 4a und 4b dargestellten Ausführungsbeispiel als natürliche Trennschicht durch Salzschmelze gebildet ist, unter die Gasrückhaltevorrichtung 37 gedrückt. Um zu vermeiden, dass es bei diesem Vorgang zu einer Durchmischung der Schichten kommt, kann vorgesehen sein, dass an der Gasrückhaltevorrichtung 37 zusätzliche Einbauten vorgesehen sind, um die Schichtung zu stabilisieren, wie beispielsweise ein Diffusor 38. Der Diffusor 38 sorgt dafür, dass sich unterhalb der Gasrückhaltevorrichtung 37 eine Schichtung aufbauen kann und es zu keiner exergetisch ungünstigen Durchmischung kommt.

Im Rahmen des Entladeprozesses der erfindungsgemäßen Wärmespeichervorrichtung 1 muss das Gas 39 aus dem Ausgleichsbehälter 21 in den Wärmespeicherbehälter 3 eingeleitet werden. Hierzu ist es notwendig, dass in dem Ausgleichsbehälter 21 ein Druck erzeugt wird, der das Gas 39 in den Wärmespeicherbehälter 3 drückt, da das Gas unterhalb der Gasrückhaltevorrichtung 37 durch die darüberliegende Flüssigsalzsäule einem hydrostatischen Druck unterliegt

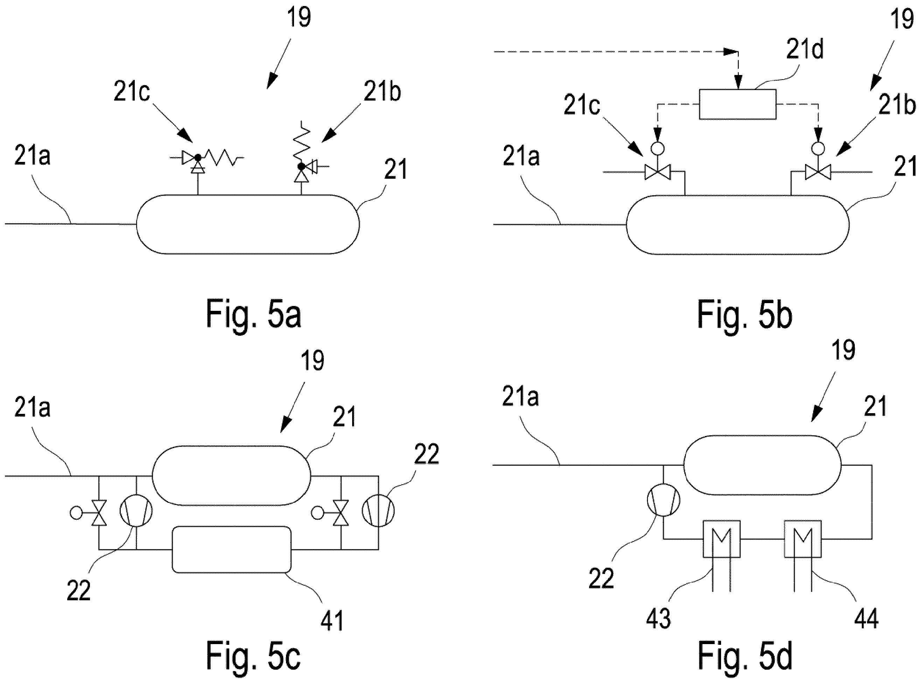

In den Figuren 5a-6 sind unterschiedliche Beispiele für Vorrichtungen der Volumenausgleichvorrichtung 19 gezeigt, über die ein entsprechender Druck für das Gas eingestellt werden kann.

In den Figuren 5a und 5b ist ein sogenanntes halboffenes System dargestellt. Da aus dem Wärmespeicherbehälter 3 durch die Leitung 21a in den Ausgleichbehälter 21 geleitete Gas kann über ein Auslassventil 21b in die Atmosphäre entlassen werden. Bei dem in Figur 5a dargestellten Ausführungsbeispiel ist das Auslassventil 21b als Überdruckventil ausgebildet. Bei dem in Figur 5b dargestellten Ausführungsbeispiel ist das Auslassventil 21b als Regelventil ausgebildet.

Bei dem Einleiten des Gases in den Wärmespeicherbehälter 3 im Rahmen des Entladeprozesses der erfindungsgemäßen Wärmespeichervorrichtung 1 wird dem Ausgleichsbehälter 21 Gas über ein Einlassventil 21c zugeführt. In dem in Figur 5a dargestellten Ausführungsbeispiel ist das Einlassventil 21c als Unterdruckventil ausgebildet. In dem in Figur 5b dargestellten Ausführungsbeispiel ist das Einlassventil 21c als Regelventil dargestellt. Bei dem in Figur 5b dargestellten werden das regelbare Auslassventil 21b und das regelbare Einlassventil 21c über einen Regler 21d geregelt.

Bei dem in Figuren 5c und 5d dargestellten Ausführungsbeispiel wird der Druck für das Gas in dem Ausgleichsbehälter 21 thermisch erzeugt, indem durch Erwärmung oder Abkühlen des Gases eine Dichteänderung und somit eine Volumenänderung des Gases hervorgerufen wird.

Bei dem in Figur 5c dargestellten Ausführungsbeispiel kann das Gas aus dem Ausgleichsbehälter 21 mittels Gebläse 22 in einen Regenerationsspeicher 41 geleitet werden, in dem das Gas erwärmt oder abgekühlt wird, worüber eine Dichte- und Volumenänderung des Gases bewirkt werden kann.

Bei dem in Figur 5d dargestellten Ausführungsbeispiel kann das Gas aus dem Ausgleichsbehälter 21 über ein Gebläse 22 einer Heizvorrichtung 43 und einer Kühlvorrichtung 44 zugeführt werden, worüber eine entsprechende Temperaturänderung und somit eine Dichte- und Volumenänderung des Gases bewirkt werden kann.

Neben der thermischen Druckerzeugung zum Einleiten des Gases in den Wärmespeicherbehälter 3 ist auch eine mechanische Druckerzeugung möglich.

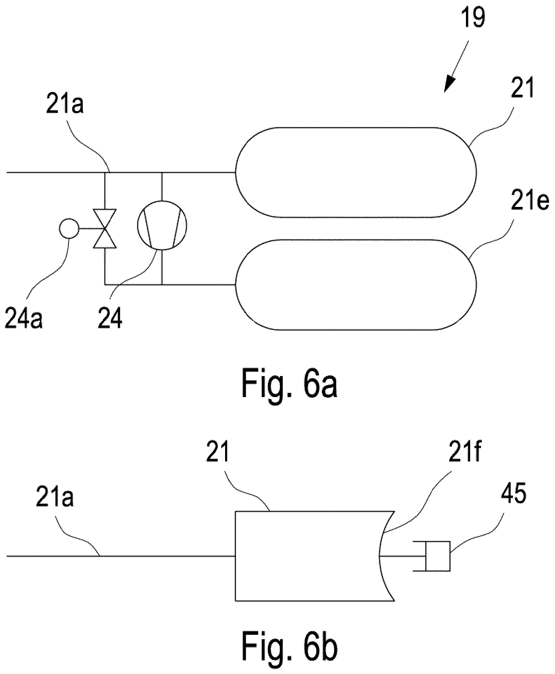

In Figur 6a ist ein Ausführungsbeispiel gezeigt, bei dem die Volumenausgleichvorrichtung neben dem Ausgleichsbehälter 21 einen zweiten Ausgleichsbehälter 21e aufweist, wobei über einen Verdichter 24 Gas mit erhöhtem Druck in den zweiten Ausgleichsbehälter 21e geleitet werden kann. Über ein Regelventil 24a kann das komprimierte Gas aus dem zweiten Ausgleichsbehälter 21e mit erhöhtem Druck in die Leitung 21a und somit in den Wärmespeicherbehälter 3 geleitet werden.

In Figur 6b erfolgt eine Volumenänderung auf mechanische Weise, wobei der Gasdruck konstant bleibt. Der Ausgleichsbehälter 21 weist eine flexible Wand 21f auf, die über eine Antriebsvorrichtung 45 bewegt werden kann, wodurch das Volumen in dem Ausgleichsbehälter 21 verändert werden kann. Wenn Gas in den Wärmespeicherbehälter 3 eingeleitet werden soll, drückt die Antriebsvorrichtung 45 die flexible Wand 21f in den Ausgleichsbehälter 21, sodass das Volumen des Ausgleichsbehälters 21 verringert wird und das Gas aus dem Ausgleichsbehälter 21 durch die Leitung 21a in den Wärmespeicherbehälter 3 gedrückt wird. Umgekehrt kann durch die Antriebsvorrichtung 45 die flexible Wand 21f auch aus dem Ausgleichsbehälter 21 herausgezogen werden, sodass das Volumen des Ausgleichsbehälters 21 vergrößert wird. Da beim Beladen der erfindungsgemäßen Wärmespeichervorrichtung 1 das Gas aus dem Wärmespeicherbehälter 3 herausgedrückt wird, ist für das Bewegen der flexiblen Wand 21f zur Vergrößerung des Volumens des Ausgleichsbehälters 21 nur ein geringer oder gar kein Aufwand notwendig. Daher kann auch anstelle der Antriebsvorrichtung 45 beispielsweise eine Federvorrichtung vorgesehen sein, die beim Einleiten von Gas in den Ausgleichsbehälter 21 und einer entsprechenden Verformung der flexiblen Wand 21f zusammengedrückt wird und zum Einleiten des Gases in den Wärmespeicherbehälter 3 die flexible Wand 21f entsprechend eindrückt. Die flexible Wand 21f kann in Form eines Faltenbalgs ausgeführt werden.

Die erfindungsgemäße Wärmespeichervorrichtung 1 hat den besonderen Vorteil, dass oberhalb der heißen Salzschmelze 9 kein oder nur ein geringes Gasvolumen vorhanden ist, sodass die Neigung des Salzes zum Zersetzen reduziert ist und nur eine geringe oder keine Ausgasung erfolgt bzw. erhöhte Betriebstemperaturen ermöglicht werden. Dabei kann der Wärmespeicherbehälter 3 der erfindungsgemäßen Wärmespeichervorrichtung 1 mit einem Innendruck, der unter 500 mbar Unterschied zu der Atmosphäre aufweist, betrieben werden, sodass der Wärmespeicherbehälter 3 nicht der Druckgerätrichtlinie unterliegt. Sofern eine Gasphase oberhalb des Heißabschnitts vorliegt, weist diese während des Betriebs eine im Wesentlichen konstante Temperatur auf, sodass kein Volumenausgleich für eine Volumenänderung des Gases notwendig ist. Auf diese Weise ermöglicht die erfindungsgemäße Wärmespeichervorrichtung 1 eine besonders vorteilhafte Wärmespeicherung in der Salzschmelze.

### Bezugszeichenliste

- 1: Wärmespeichervorrichtung
- 3: Wärmespeicherbehälter
- 5: Isolierschicht
- 7: Heißbereich
- 9: heiße Salzschmelze
- 11: Kaltbereich
- 13: kalte Salzschmelze
- 15: Trennschicht
- 17: Gasschicht
- 19: Volumenausgleichvorrichtung
- 21: Ausgleichsbehälter,
- 21a: Zuführungsleitung
- 21b: Auslassventil
- 21c: Einlassventil
- 21d: Regler
- 21e: zweiter Ausgleichsbehälter
- 21f: flexible Wand
- 22: Gebläse
- 23: Steigleitung
- 24: Verdichter
- 24a: Regelventil
- 25: Entladepumpe
- 27: Beladepumpe
- 28: Ventil
- 29: Behälter
- 31: Überlauf
- 33: Zusatzpumpe
- 35: Entleerungspumpe
- 37: Gasrückhaltevorrichtung
- 38: Diffusor
- 39: Gas
- 41: Regenerationsspeicher
- 43: Heizvorrichtung
- 44: Kühlvorrichtung,
- 45: Antriebsvorrichtung
- 120: Beladeprozess
- 110: Entladeprozess

## Patentansprüche

1. Wärmespeichervorrichtung (1) zur sensiblen Wärmespeicherung in Salzschmelzen, mit einem Wärmespeicherbehälter (3) zur Aufnahme von Salzschmelze, wobei in dem Wärmespeicherbehälter (3) eine Trennschicht (15) angeordnet ist zur Trennung eines Kaltbereichs (11), in dem kalte Salzschmelze (13) angeordnet ist, von einem Heißbereich (7), in dem heiße Salzschmelze (9) angeordnet ist, wobei der Kaltbereich (11) unterhalb des Heißbereichs (7) angeordnet ist, mit einer Vorrichtung zur Be- und Entladung des Wärmespeicherbehälters (3), die mit dem Kaltbereich (11) und dem Heißbereich (7) verbunden ist, und mit eine Volumenausgleichvorrichtung (19) zum Ausgleich einer temperaturbedingten Volumenänderung der Salzschmelze, wobei die Volumenausgleichvorrichtung (19) ein Ausgleichsfluid aufweist und mit dem Kaltbereich (7) und/oder der Trennschicht (15) zusammenwirkt und wobei beim Be- und Entladen des Wärmespeicherbehälters (3) die Volumenausgleichvorrichtung (19) die Ausbildung einer Gasatmosphäre oberhalb des Heißbereiches (7) oder eine Volumenänderung einer Gasatmosphäre oberhalb des Heißbereiches (7) verhindert,
**dadurch gekennzeichnet, dass**
die Volumenausgleichvorrichtung (19) einen Ausgleichsbehälter (21) aufweist, wobei der Ausgleichsbehälter (21) mit dem Kaltbereich (11) und/oder der Trennschicht (15) verbunden ist und wobei das Ausgleichsfluid in dem Ausgleichsbehälter (21) angeordnet ist, wobei das Ausgleichsfluid ein Gas ist, das zum Volumenausleich in den Kaltbereich (11) und/oder die Trennschicht (15) einleitbar ist.

2. Wärmespeichervorrichtung nach Anspruch 1, **dadurch gekennzeichnet, dass** in dem Wärmespeicherbehälter (3) eine Gasrückhaltevorrichtung (37) angeordnet ist, die das Gas nach dem Einleiten in den Kaltbereich (11) oder in die Trennschicht (15) in einem vorgegebenen Abschnitt in dem Wärmespeicherbehälter (3) hält, oder dass die Gasrückhaltevorrichtung (37) als Platte mit einem nach unten vorstehenden Seitenrand ausgebildet ist, wobei ein Diffusor (38) am Randbereich der Gasrückhaltevorrichtung (37) zur Stabilisierung der Schichtung in der Salzschmelze angeordnet ist.

3. Wärmespeichervorrichtung nach Anspruch 1 oder 2, **dadurch gekennzeichnet, dass** der Ausgleichsbehälter (21) eine Verbindung zur Atmosphäre aufweist, wobei bei temperaturbedingter Ausdehnung der Salzschmelze das Gas in die Atmosphäre leitbar ist.

4. Wärmespeichervorrichtung nach einem der Ansprüche 1 bis 3, **dadurch gekennzeichnet, dass** an dem Ausgleichsbehälter (21) eine Volumenänderungsvorrichtung zur Volumenänderung des Gases angeordnet ist.

5. Wärmespeichervorrichtung nach Anspruch 4, **dadurch gekennzeichnet, dass** die Volumenänderungsvorrichtung ein Heizelement (43) und/oder eine Kühlvorrichtung (44) aufweist, wobei über das Heizelement (43) und/oder die Kühlvorrichtung (44) zur Volumenänderung die Temperatur das Gases veränderbar ist, oder dass die Volumenänderungsvorrichtung an dem Ausgleichsbehälter (21) einen thermischen Energiespeicher aufweist, über den das Gas erwärmbar oder abkühlbar ist.

6. Wärmespeichervorrichtung nach einem der Ansprüche 3 bis 5, **dadurch gekennzeichnet, dass** die Volumenänderungsvorrichtung eine Vorrichtung zur mechanischen Volumenänderung des Gases aufweist.

7. Wärmespeichervorrichtung nach Anspruch 1 oder 2, **dadurch gekennzeichnet, dass** der Ausgleichsbehälter (21) ein veränderbares Volumen aufweist.

8. Wärmespeichervorrichtung nach Anspruch 7, **dadurch gekennzeichnet, dass** der Ausgleichsbehälter (21) eine elastische, bewegbare oder flexible Wand oder einen elastischen, bewegbaren oder flexiblen Wandabschnitt aufweist.

9. Wärmespeichervorrichtung nach einem der vorangegangenen Ansprüche, **dadurch gekennzeichnet, dass** die Volumenausgleichvorrichtung in dem Kaltbereich (11) ein Ausgleichsraum aufweist, der ein veränderbares Volumen aufweist, wobei das Ausgleichsfluid in den Ausgleichsraum einleitbar ist und/oder, dass der Wärmespeicherbehälter (3) eine bewegbare Wand oder einen bewegbaren Wandabschnitt aufweist.

## Claims

1. A heat storage device (1) for sensible heat storage in molten salts, comprising a heat storage reservoir (3) for receiving molten salt, wherein a separating layer (15) is arranged in the heat storage reservoir (3) for separating a cold region (11), in which cold molten salt (13) is disposed, from a hot region (7), in which hot molten salt (9) is disposed, wherein the cold region (11) is arranged below the hot region (7), comprising a device for loading and unloading the heat storage reservoir (3), which is connected to the cold region (11) and the hot region (7), and comprising a volume compensation device (19) for compensating for a temperature-related volume change of the molten salt, wherein the volume compensation device (19) comprises a compensation fluid and cooperates with the cold region (7) and/or the separating layer (15), and wherein during loading and unloading of the heat storage reservoir (3) the volume compensation device (19) prevents the formation of a gas atmosphere above the hot region (7) or a change in volume of a gas atmosphere above the hot region (7),
**characterized in that**
the volume compensation device (19) comprises a compensation reservoir (21), wherein the compensation reservoir (21) is connected to the cold region (11) and/or the separating layer (15), and wherein the compensation fluid is disposed in the compensation reservoir (21), wherein the compensation fluid is a gas which can be introduced into the cold region (11) and/or the separating layer (15) for volume compensation.

2. The heat storage device according to claim 1, **characterized in that** a gas retention device (37) is arranged in the heat storage reservoir (3), which retains the gas in a predetermined section in the heat storage reservoir (3) after it has been introduced into the cold region (11) or into the separating layer (15), or **in that** the gas retention device (37) is formed as a plate having a side edge projecting downwards, wherein a diffuser (38) is arranged at the edge region of the gas retention device (37) to stabilize the layering in the molten salt.

3. The heat storage device according to claim 1 or 2, **characterized in that** the compensation reservoir (21) has a connection to the atmosphere, wherein the gas can be transferred to the atmosphere in the event of temperature-related expansion of the molten salt.

4. The heat storage device according to any one of claims 1 to 3, **characterized in that** a volume changing device is arranged on the compensation reservoir (21) for changing the volume of the gas.

5. The heat storage device according to claim 4, **characterized in that** the volume changing device has a heating element (43) and/or a cooling device (44), wherein the temperature of the gas can be changed by means of the heating element (43) and/or the cooling device (44) for changing the volume, or **in that** the volume changing device has a thermal energy store on the compensation reservoir (21), by means of which the gas can be heated or cooled.

6. The heat storage device according to any one of claims 3 to 5, **characterized in that** the volume changing device has a device for mechanical volume change of the gas.

7. The heat storage device according to claim 1 or 2, **characterized in that** the compensation reservoir (21) has a variable volume.

8. The heat storage device according to claim 7, **characterized in that** the compensation reservoir (21) has an elastic, movable or flexible wall or an elastic, movable or flexible wall section.

9. The heat storage device according to any one of the preceding claims, **characterized in that** the volume compensation device in the cold region (11) has a compensation chamber with a variable volume, wherein the compensation fluid can be introduced into the compensation chamber, and/or **in that** the heat storage reservoir (3) has a movable wall or a movable wall section.

## Revendications

1. Dispositif d'accumulation de chaleur (1) pour l'accumulation sensible de chaleur dans des sels fondus, comportant un récipient d'accumulation de chaleur (3) pour la réception de sel fondu, dans lequel une couche de séparation (15) est disposée dans le récipient d'accumulation de chaleur (3) pour la séparation d'une zone froide (11) dans laquelle est disposé du sel fondu froid (13), d'une zone chaude (7) dans laquelle est disposé du sel fondu chaud (9), dans lequel la zone froide (11) est disposée en dessous de la zone chaude (7), comportant un dispositif pour le chargement et le déchargement du récipient d'accumulation de chaleur (3), lequel dispositif est raccordé à la zone froide (11) et à la zone chaude (7), et comportant un dispositif d'équilibrage de volume (19) pour l'équilibrage d'une modification de volume du sel fondu due à la température, dans lequel le dispositif d'équilibrage de volume (19) présente un fluide d'équilibrage et coopère avec la zone froide (7) et/ou la couche de séparation (15) et dans lequel, lors du chargement et du déchargement du récipient d'accumulation de chaleur (3), le dispositif d'équilibrage de volume (19) empêche la formation d'une atmosphère gazeuse au-dessus de la zone chaude (7) ou une modification de volume d'une atmosphère gazeuse au-dessus de la zone chaude (7), **caractérisé en ce que**
le dispositif d'équilibrage de volume (19) présente un récipient d'équilibrage (21), dans lequel le récipient d'équilibrage (21) est raccordé à la zone froide (11) et/ou à la couche de séparation (15) et dans lequel le fluide d'équilibrage est disposé dans le récipient d'équilibrage (21), dans lequel le fluide d'équilibrage est un gaz qui peut être introduit dans la zone froide (11) et/ou dans la couche de séparation (15) pour l'équilibrage de volume.

2. Dispositif d'accumulation de chaleur selon la revendication 1, **caractérisé en ce qu'**un dispositif de retenue de gaz (37) est disposé dans le récipient d'accumulation de chaleur (3), lequel dispositif de retenue de gaz maintient le gaz dans une section prédéterminée dans le récipient d'accumulation de chaleur (3) après son introduction dans la zone froide (11) ou dans la couche de séparation (15), ou **en ce que** le dispositif de retenue de gaz (37) est réalisé sous forme de plaque comportant un bord latéral faisant saillie vers le bas, dans lequel un diffuseur (38) est disposé dans la zone formant bord du dispositif de retenue de gaz (37) pour la stabilisation de la disposition par couches dans le sel fondu.

3. Dispositif d'accumulation de chaleur selon la revendication 1 ou 2, **caractérisé en ce que** le récipient d'équilibrage (21) présente un raccordement vers l'atmosphère, dans lequel le gaz peut être conduit dans l'atmosphère en cas de dilatation du sel fondu due à la température.

4. Dispositif d'accumulation de chaleur selon l'une des revendications 1 à 3, **caractérisé en ce qu'**un dispositif de modification de volume est disposé sur le récipient d'équilibrage (21) pour la modification de volume du gaz.

5. Dispositif d'accumulation de chaleur selon la revendication 4, **caractérisé en ce que** le dispositif de modification de volume présente un élément chauffant (43) et/ou un dispositif de refroidissement (44), dans lequel la température du gaz peut être modifiée par l'intermédiaire de l'élément chauffant (43) et/ou du dispositif de refroidissement (44) pour la modification de volume, ou **en ce que** le dispositif de modification de volume présente, sur le récipient d'équilibrage (21), un accumulateur d'énergie thermique par l'intermédiaire duquel le gaz peut être réchauffé ou refroidi.

6. Dispositif d'accumulation de chaleur selon l'une des revendications 3 à 5, **caractérisé en ce que** le dispositif de modification de volume présente un dispositif pour la modification de volume mécanique du gaz.

7. Dispositif d'accumulation de chaleur selon la revendication 1 ou 2, **caractérisé en ce que** le récipient d'équilibrage (21) présente un volume modifiable.

8. Dispositif d'accumulation de chaleur selon la revendication 7, **caractérisé en ce que** le récipient d'équilibrage (21) présente une paroi élastique, mobile ou flexible ou une section formant paroi élastique, mobile ou flexible.

9. Dispositif d'accumulation de chaleur selon l'une des revendications précédentes, **caractérisé en ce que** le dispositif d'équilibrage de volume présente, dans la zone froide (11), un espace d'équilibrage qui présente un volume modifiable, dans lequel le fluide d'équilibrage peut être introduit dans l'espace d'équilibrage et/ou **en ce que** le récipient d'accumulation de chaleur (3) présente une paroi mobile ou une section formant paroi mobile.
